# FASCICULE DE BREVET EUROPEEN

(11) **EP 2 542 331 B1**
(45) Date de publication et mention de la délivrance du brevet: **04.07.2018**
(21) Numéro de dépôt: 11709159.5
(22) Date de dépôt: 11.02.2011
(51) Int. Cl.: B01D 53/94, F01N 3/035, F01N 11/00, F01N 13/00

(54) **PROCEDE DE DETECTION DU FONCTIONNEMENT DEFAILLANT D'UN FILTRE A PARTICULES D'UN SYSTEME ANTI-POLLUTION**
VERFAHREN FÜR DEN NACHWEIS EINES DEFEKTEN BETRIEBS EINES PARTIKELFILTERS EINES REINHALTUNGSSYSTEMS
METHOD FOR DETECTING THE DEFECTIVE OPERATION OF A PARTICULATE FILTER OF A POLLUTION CONTROL SYSTEM

(30) Priorité: 02.03.2010 FR 1051473
(43) Date de publication de la demande: 09.01.2013
(73) Titulaire: PSA Automobiles SA, 78300 Poissy (FR)
(72) Inventeur: TRONEL, Frédéric, F-92600 Asnieres Sur Seine (FR)
(74) Mandataire: Renous Chan, Véronique
(86) Numéro de dépôt international: PCT/FR2011/050294
(87) Numéro de publication internationale: WO 2011/107686

(56) Documents cités:
- EP-A1- 1 403 479
- EP-A1- 1 892 396
- EP-A1- 1 959 108
- WO-A1-2008/048175
- DE-A1-102006 062 515
- DE-A1-102008 027 575
- JP-A- 2001 329 829

## Description

La présente invention concerne un procédé de détection du fonctionnement défaillant d'un filtre à particules d'un système anti-pollution d'un moteur thermique.

Les véhicules munis d'un moteur thermique comportent, inséré dans la ligne d'échappement des gaz brulés, un système anti-pollution destiné à réduire en totalité ou en partie le rejet d'émissions polluantes dans l'atmosphère. Ce système, appelé parfois "pot catalytique", comporte un filtre à particules dans lequel sont piégées les particules de suie émises par le moteur et des catalyseurs qui favorisent les réactions chimiques qui tendent à transformer les constituants toxiques des gaz d'échappement en éléments neutres pour l'environnement. Les constituants toxiques les plus connus transformés par catalyse sont les oxydes d'azotes, habituellement désignés par NOₓ, les hydrocarbures HC et le monoxyde de carbone CO. Les oxydes d'azote sont transformés en azote et en dioxyde de carbone. Le monoxyde de carbone CO et les hydrocarbures imbrulés sont transformés en dioxyde de carbone CO₂ et en eau.

Le filtre à particules est généralement constitué d'un cylindre en céramique comportant une multitude de canaux parallèles et de petite section, les particules de suie étant piégées dans ces canaux. Au bout d'un certain temps de fonctionnement, il est nécessaire de régénérer le filtre de façon à déboucher les canaux obstrués par les particules piégées. Pour ce faire, les particules sont brûlées en élevant la température du filtre jusqu'à une température comprise entre 400 et 600 °C. Lorsque la combustion des particules est amorcée à l'entrée du filtre, elle s'auto-entretient et se propage dans tout le filtre.

Le substrat des catalyseurs peut avantageusement être le filtre à particules. Le filtre est alors imprégné par une solution contenant les catalyseurs, lesquels se déposent dans les canaux du filtre. Ceci permet de réduire l'encombrement du dispositif anti-pollution.

Pour la dépollution des émissions de NOₓ, la technologie SCR (pour "Selective Catalytic Réduction") s'est montrée particulièrement efficace, et en particulier la technologie SCR utilisant un agent réducteur tel que l'ammoniac NH₃ ou l'urée CO(NH₂)₂ ou des dérivés de l'urée. L'urée ou l'un de ses dérivés est directement injectée sous forme liquide et pulvérisée dans la ligne d'échappement en amont du filtre à particules. En raison de la température élevée, l'urée se décompose en ammoniac et en gaz carbonique. L'ammoniac réagit avec les oxydes d'azote pour former de l'azote et de l'eau.

La quantité de réducteur à introduire est déterminée notamment grâce à l'information d'un capteur d'oxydes d'azote (appelé par la suite "capteur NOₓ) situé en aval du catalyseur SCR. Ce capteur permet aussi de réaliser le diagnostic du dispositif de traitement des NOₓ.

L'efficacité du filtre à particules peut être déterminée en mesurant la différence de pressions entre l'amont et l'aval du filtre, par exemple à l'aide d'un ou plusieurs capteur(s). Une autre solution consiste à détecter à l'aide d'un capteur des émissions de suie en aval du filtre. Cependant ces solutions augmentent la complexité technique et donc le coût et les risques de dysfonctionnement ou de défaillance du système.

La demande de brevet EP 1 985 830 décrit un dispositif et un procédé permettant de déterminer, sans capteur NOₓ, si une détérioration des catalyseurs de NOₓ s'est produite, en se basant sur les quantités estimée et détectée de particules. Le procédé décrit ne permet pas de déterminer une détérioration du filtre à particules. On connait encore du document DE102006062515 un procédé de diagnostic de chargement du filtre en suies.

La présente invention concerne un procédé permettant de déterminer, sans l'aide d'un capteur dédié au fonctionnement du filtre à particules, si le filtre est défaillant.

De façon plus précise, l'invention concerne un procédé de détection du fonctionnement défaillant d'un filtre à particules d'un système anti-pollution d'un moteur thermique, ledit filtre à particules étant imprégné d'un catalyseur permettant de réduire les oxydes d'azotes NOₓ et un capteur de NOₓ situé en aval dudit filtre à particules permettant de détecter les NOₓ non réduits par ledit catalyseur. Selon l'invention, on utilise l'information fournie par ledit capteur NOₓ pour diagnostiquer un fonctionnement défaillant dudit filtre à particules, ladite information fournie par ledit capteur étant l'évolution des caractéristiques de conversion des NOₓ par ledit catalyseur.

Par fonctionnement défaillant du filtre à particules il est entendu au sens de l'invention une baisse d'efficacité de la capacité de filtration.

Procédé dans lequel :
- la quantité des NOₓ présents dans les gaz d'échappement dudit moteur, en amont dudit filtre à particules, est déterminée pour des conditions de fonctionnement sévères et prédéterminées du moteur,
- pour au moins l'une desdites conditions prédéterminées, on mesure la quantité des NOₓ détectée par ledit capteur NOₓ,
- on détermine l'efficacité de conversion dudit catalyseur et si l'efficacité déterminée est en baisse, on en conclut à une défaillance du filtre à particules.

Selon un autre mode de mise en oeuvre:
- un agent réducteur est injecté en amont dudit filtre à particules, ledit agent étant d'un type favorisant la conversion des NOₓ en ammoniac et étant injecté en quantité nécessaire et suffisante pour convertir les NOₓ contenus dans les gaz d'échappement en amont dudit filtre à particules,
- on détecte l'apparition éventuelle d'émissions supplémentaires d'ammoniac à l'aide du capteur NOₓ à la suite de conditions de fonctionnement sévères du moteur, et
- si au moins une émission supplémentaire d'ammoniac est détectée par le capteur NOₓ, alors on diagnostique une défaillance du filtre à particules.

Lesdites conditions de fonctionnement sévères font avantageusement partie des conditions de roulement du véhicule imposées par les tests d'homologation concernant les normes anti-pollution. Ces conditions peuvent par exemple comporter au moins une forte accélération de durée relativement longue de façon à atteindre une vitesse du véhicule relativement élevée.

Selon un autre mode de mise en oeuvre:
- des injections d'un agent réducteur sont réalisées en amont dudit filtre à particules, ledit agent étant d'un type favorisant la conversion des NOₓ en ammoniac et étant injecté en quantité supérieure à la quantité suffisante pour convertir le NOₓ contenus dans les gaz d'échappement en amont du filtre à particules,
- on détecte à l'aide dudit capteur NOₓ une augmentation éventuelle des émissions d'ammoniac, et
- en cas d'une telle augmentation on diagnostique une défaillance du filtre à particules.

Ledit catalyseur peut être de préférence du type SCR et ledit agent réducteur peut être choisi parmi l'ammoniac, l'urée et les dérivés de l'urée sources d'ammoniac.

D'autres avantages et caractéristiques de l'invention apparaîtront au cours de la description qui suit de plusieurs modes de réalisation de l'invention, donnés à titre d'exemples non limitatifs, en référence aux dessins annexés et sur lesquels :
- les figures 1 et 2 montrent deux profils de température dans un filtre à particules lors d'une régénération;
- la figure 3 représente l'efficacité de conversion d'une formulation SCR en fonction de la température,
- la figure 4 illustre la dégradation de l'imprégnation d'un filtre à particule avec une solution de catalyseurs en fonction de la température lors d'une régénération sévère du filtre;
- les figures 5 et 6 illustrent chacune une stratégie passive de détection de la défaillance d'un filtre à particules;
- la figure 7 illustre une stratégie active de détection de la défaillance d'un filtre à particules;
- les figures 8 et 9 représente chacune, sous la forme d'un logigramme, un exemple de stratégie de diagnostic.

Les dessins annexés pourront non seulement servir à compléter l'invention, mais aussi contribuer à sa définition, le cas échéant.

Afin de bien comprendre la présente invention, il est utile de rappeler les divers modes de défaillances d'un filtre à particules, ci-après désigné par l'abréviation FAP. La défaillance de filtration du FAP se caractérise généralement par un endommagement de ses canaux qui peut être dû à deux raisons principales:

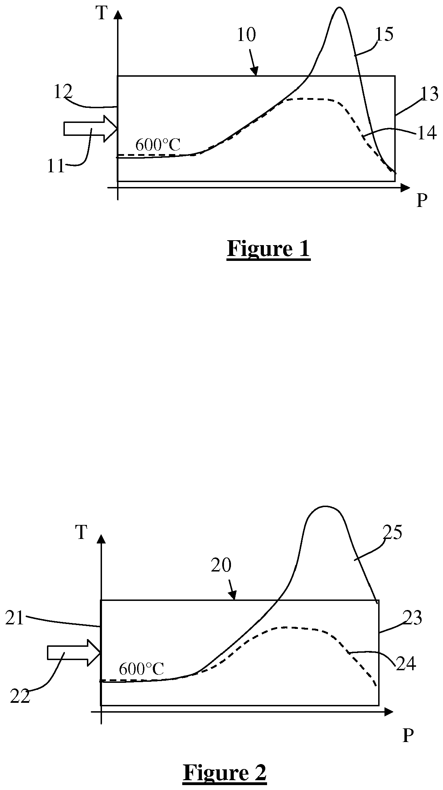

La première de ces raisons est la fissuration des éléments du FAP consécutive à l'apparition d'un gradient thermique trop important au sein du FAP. Ce phénomène peut se produire pendant la régénération du FAP si les conditions de régénération sont trop sévères (par exemple présence de trop de suies au sein du FAP ou conditions de fonctionnement du véhicule peu favorables à la régénération telles qu'une vitesse basse, une accélération forte et l'arrêt du moteur). De façon générale, les situations sévères de régénération sont celles susceptibles d'entrainer des gradients de température importants au sein du FAP. La figure 1 illustre ce phénomène. Le FAP est symbolisé par le rectangle 10, les gaz d'échappement entrant comme indiqué par la flèche 11 par l'entrée (ou face avant) 12 et sortant par la face arrière 13. Les courbes 14 et 15 représentent le profil de température T en fonction de la position P dans le FAP 10, respectivement avec des conditions non sévères de régénération (courbe 14 en pointillés) et avec des conditions sévères (courbe 15). Pour des conditions habituelles de régénération (courbe 14), la température T à l'entrée 12 du FAP est généralement comprise entre 400 et 600°C et progresse le long du FAP pour atteindre une valeur comprise approximativement entre 800 et 950°C selon le type d'imprégnation. La température à l'entrée doit être suffisante pour amorcer le brûlage de la suie piégée dans les canaux, puis la combustion se propage à l'intérieur du FAP. Pour des conditions sévères de régénération, la température à l'intérieur du FAP peut atteindre des valeurs supérieures à 1000°C (courbe 15), ce qui peut créer des contraintes à l'intérieur du matériau et donc produire des fissures dans les zones à fort gradient de température. Ces effets sont cumulatifs: lorsque le FAP rencontre plusieurs fois des conditions pouvant entrainer des fissures, celles-ci peuvent augmenter et la filtration se dégrader.

La seconde de ces raisons est la une perte de filtration due à des phénomènes locaux, tels qu'une concentration de particules à certains endroits. En brulant, ces concentrations de particules entrainent des élévations de température importantes, créant des contraintes thermiques locales pouvant conduire à des fusions locales du matériau. Des concentrations importantes de particules peuvent se rencontrer par exemple à l'entrée du FAP ou en sortie, par exemple lorsque les particules accumulées forment un bouchon. La température de fusion du matériau dépend du matériau lui-même et de son interaction avec les catalyseurs d'imprégnation. A titre d'exemple, les FAP sont souvent fabriqués en cordiérite (mélange d'alumine et de silice), qui fond à une température voisine de 1300°C, ou en carbure de silicium qui fond vers 2000°C.

La figure 2 illustre un profil de température T qu'il peut régner à l'intérieur d'un FAP au cours de sa régénération, en fonction de la position P dans le filtre. Le FAP est représenté par le rectangle 20, avec sa face avant 21 par laquelle pénètrent les gaz d'échappement (flèche 22) et sa face de sortie 23. La courbe 24 est un profil habituel de température à l'intérieur du FAP, pour une régénération normale du filtre. La courbe 25 montre un profil de température à l'intérieur du filtre avec une élévation de température importante (environ 1300°C) juste avant la face de sortie 23. Cette température importante peu conduire à une fusion locale du matériau, ce qui conduit à endommager le filtre.

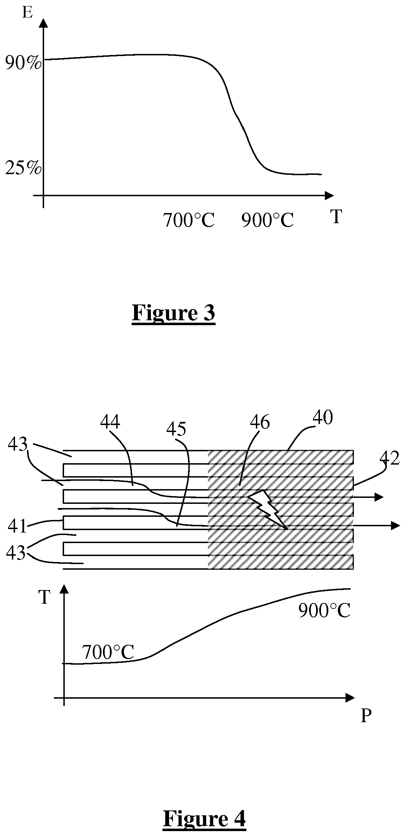

De part les niveaux de température atteints et le caractère localisé en fond de filtre de ces niveaux, les phénomènes qui induisent une dégradation de la performance de filtration du FAP, qu'ils soient unitaires ou progressifs, vont induire une dégradation significative de la conversion NOₓ du filtre imprégné. De plus, pour un filtre imprégné d'une solution catalytique, l'efficacité du filtre pour convertir les NOₓ en éléments non polluants peut être dégradée par une température de régénération du filtre trop élevée. C'est ce qui est illustré sur la figure 3 qui représente l'efficacité global E du filtre pour la conversion des NOₓ en fonction de la température T. On remarque que l'efficacité de conversion des NOₓ est relativement stable jusqu'à environ 700°C, puis diminue fortement, passant d'environ 90% à 25%, lorsque la température est comprise entre 700°C et 900°C environ. La capacité de conversion des NOₓ diminue donc très rapidement si la température de régénération dépasse environ 700°C.

Des conditions de régénération sévères du FAP peuvent donc entrainer simultanément une dégradation de filtration des particules et de la performance de conversion des NOₓ d'une partie de l'imprégnation catalytique. C'est ce qu'illustre la figure 4 qui représente schématiquement un FAP 40 imprégné par une solution catalytique. Le filtre comporte une face avant 41 recevant les gaz d'échappement et une face de sortie 42. Le FAP comporte une multitude de canaux parallèles 43 destinés à piéger les particules contenues dans les gaz d'échappement. La figure 4 représente également la température maximale T atteinte dans le filtre lors d'une régénération sévère en fonction de la position P dans le FAP. La température dans le filtre passe d'environ 700°C à l'entrée pour atteindre environ 900°C à la sortie. La zone hachurée 46 du FAP correspond à la zone où la température excessive a créé des dommages dans le filtre: d'une part, des canaux, tels que 44 et 45, ont été endommagés et ne filtre plus les particules et, d'autre part, l'imprégnation du filtre a été dégradée ce qui conduit à une dégradation de l'efficacité de conversion des NOₓ. En d'autres termes, on pourrait dire que l'effet d'une température trop élevée est de raccourcir le FAP à sa partie qui reste non endommagée, partie non hachurée de la figure 4.

Dans le cas d'un système avec injection d'urée en amont du FAP, l'urée pulvérisée dans la ligne des gaz d'échappement se transforme, en raison de la température élevée, en ammoniac NH₃ et en gaz carbonique CO₂. L'ammoniac réagit à son tour avec les NOₓ pour former de l'azote et de l'eau. La dégradation de l'imprégnation catalytique du FAP se traduit par une baisse de conversion des NOₓ et donc, pour un système avec injection d'urée, par une fuite d'ammoniac en aval du FAP. Ce phénomène est habituellement désigné par "NH₃ slip".

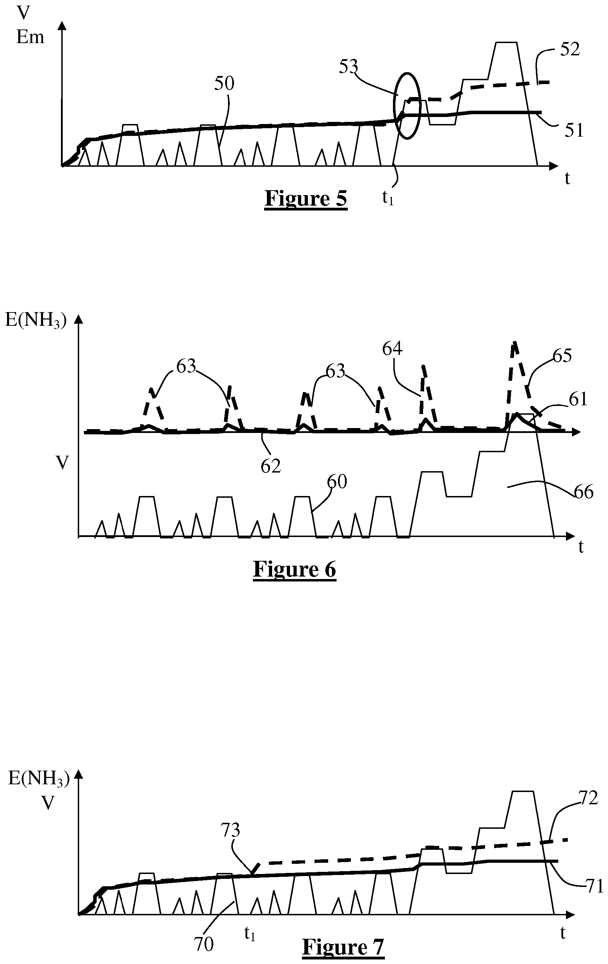

Selon la présente invention, le diagnostic de filtration des particules est effectué à l'aide de l'information fournie par le capteur NOₓ et non par un capteur dédié. Le capteur NOₓ permet donc de diagnostiquer, non seulement une baisse d'efficacité de conversion des catalyseurs, mais également une défaillance de filtration des particules. Différentes stratégies, illustrées en regard des figures 5 à 9, permettent ce diagnostic.

Les figures 5 et 6 illustrent chacune une stratégie passive. Selon la stratégie passive illustrée sur la figure 5, on détecte des baisses de rendement de conversion des NOₓ dans des zones de fonctionnement sévère du moteur. La figure 5 représente, d'une part, la vitesse V du véhicule illustrée par la courbe 50 en fonction du temps t et, d'autre part l'émission cumulée Em de NOₓ détectée par le capteur NOₓ en fonction du temps t, pour un FAP non dégradé (courbe 51 en trait plein) et pour un FAP dégradé (courbe 52 en tirets). Le profil de la vitesse V est en fait le profil imposé pour les tests d'homologation des véhicules. A l'instant t₁ commencent des conditions de fonctionnement sévères pour le moteur: on remarque en effet une forte accélération, de durée assez longue et une vitesse atteinte relativement élevée. A titre d'exemple et pour les tests d'homologation, une forte accélération pourrait être de passer de 0 à 70 km/h en un maximum de 60 secondes, ou de 100 à 120 km/h en un maximum de 25 secondes, ou encore passer de 70 à 100 km/h en un maximum de 40 secondes. Un autre cas de fonctionnement sévère pourrait être par exemple de rouler à vitesse relativement élevée (par exemple supérieure 130km/h) pendant une longue période. De façon générale, on entend ici par conditions de fonctionnement "sévères" du moteur des conditions sévères pour le cycle de fonctionnement imposé pour l'homologation du véhicule concernant les normes anti-pollution. Pour ces conditions sévères et pour un FAP défaillant (courbe 52), on constate à partir du temps ti une augmentation d'amplitude du signal délivré par le capteur NOₓ (zone marquée par l'ovale 53), ce qui correspond à une baisse d'efficacité de conversion des NOₓ. Selon un mode de mise en oeuvre de l'invention, on détecte à l'aide du capteur NOₓ une perte d'efficacité de conversion des NOₓ après une régénération déclenchée ou spontanée (perte d'efficacité telle que constatée en 53 sur la figure 5).

Afin de détecter une perte d'efficacité, le contrôle moteur peut calculer une efficacité de conversion des NOₓ. On connait en effet la quantité de NOₓ émise par le moteur (en amont du FAP), soit par mesure, soit par estimation, en fonction des conditions de fonctionnement du moteur (régime moteur, variation de ce régime et charge du moteur). On peut donc en permanence mesurer l'efficacité de conversion des NOₓ et comparer cette efficacité avec une efficacité théorique. Pour des conditions de fonctionnement sévères du moteur et après une régénération du FAP, on diagnostique une défaillance du FAP pour la filtration des particules en cas de baisse d'efficacité, en dessous d'un seuil prédéterminé,

Selon un deuxième mode passif de mise en oeuvre de l'invention, un agent réducteur, tel que de l'ammoniac, de l'urée ou un dérivé de l'urée source d'ammoniac, est injecté dans la ligne des gaz d'échappement en amont du FAP imprégné d'une solution catalytique. On peut par exemple utiliser la solution d'urée et d'eau connue commercialement sous l'appellation "AdBlue". Les agents réducteurs utilisables sont ceux qui produisent de l'ammoniac et qui permettent de détecter du NH₃ slip par le détecteur NOₓ. La quantité d'agent réducteur injectée est approximativement la quantité nécessaire pour traiter les NOₓ. En cas de dégradation du catalyseur, après une régénération du FAP, si on détecte un NH₃ slip supérieur à un seuil limite prédéterminé, alors on diagnostique une défaillance de filtration des particules. Le capteur NOₓ en aval du FAP est capable de détecter les NOₓ mais également l'ammoniac.

Ce mode de mise en oeuvre de l'invention est illustré sur la figure 6 qui représente un profil de vitesse 60 (comme précédemment il s'agit ici du profil type de vitesse imposé pour l'homologation du véhicule au regard des normes anti-pollution) et l'émission E (NH₃) de NH₃ vue par le capteur NOₓ, d'une part pour un filtre non endommagé (courbe en trait plein 61) et, d'autre part, pour un filtre défaillant (courbe en tirets 62). On remarque des émissions supplémentaires 63, 64 et 65 de NH₃ lorsque le moteur est soumis à une forte accélération, les émissions supplémentaires de NH₃ étant d'autant plus importantes que les conditions de fonctionnement du moteur sont sévères. Ainsi les pics 64 et 65 sont de plus grandes amplitudes que les pics 63 car ils correspondent à des conditions de fonctionnement 66 plus sévères.

Ainsi, on diagnostique une défaillance de filtration des particules si, après avoir injecté en amont du FAP imprégné de catalyseurs un réducteur produisant de l'ammoniac en quantité approximativement suffisante pour traiter les NOₓ contenus dans les gaz d'échappement, on détecte en aval du FAP des émissions supplémentaires d'ammoniac (en d'autres termes du "NH₃ slip") lorsque le moteur est soumis à des conditions de fonctionnement sévères.

Selon un troisième mode de mise en oeuvre de l'invention, qui est une stratégie active, une quantité de réducteur plus importante que dans le mode de mise en oeuvre précédent est injecté en amont du FAP, à un ou plusieurs instants déterminés et dans une situation de fonctionnement prédéterminée du moteur (par exemple, un point de fonctionnement stabilisé tel que le ralenti). On injecte donc une quantité de réducteur supérieure à celle qui est nécessaire pour traiter les NOₓ contenus dans les gaz d'échappement. Puis on détecte, à l'aide du capteur de NOₓ, l'apparition éventuelle de NH₃ supplémentaire en aval du FAP. L'ajout d'une quantité supplémentaire d'agent réducteur entraine dans le cas d'un FAP défaillant une augmentation d'ammoniac détecté par le capteur NOₓ en aval du FAP. Ce troisième mode de mise en oeuvre est illustré sur la figure 7 qui représente la vitesse V du véhicule en fonction du temps t (courbe 70), vitesse imposée par les tests d'homologation, et la quantité d'ammoniac E(NH₃) détectée par le capteur NOₓ, d'une part avec un FAP non défaillant (courbe 71 en trait plein) et, d'autre part avec un FAP défaillant (courbe 72). A un instant déterminé ti l'agent réducteur est injecté dans la ligne d'échappement. Avec un filtre défaillant il en résulte une augmentation d'amplitude 73 du signal délivré par le capteur NOₓ, alors qu'avec un filtre non endommagé il n'y a pas de variation appréciable du signal (courbe 71).

L'avantage du troisième mode de mise en oeuvre par rapport au deuxième est qu'avec le troisième mode de mise en oeuvre on n'a pas à attendre des conditions de fonctionnement sévères.

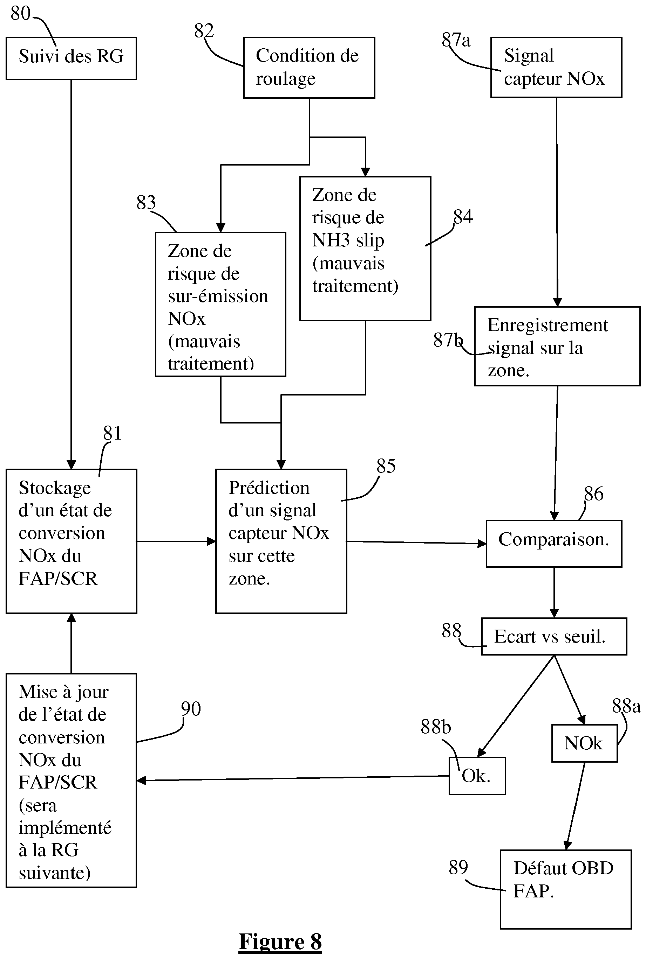

La figure 8 représente, sous la forme d'un logigramme, un exemple de stratégie de diagnostic selon laquelle on compare l'état du FAP avec son état antérieur.

On fait un suivi des régénérations (80) et on enregistre dans une mémoire le dernier état de conversion des NOₓ du FAP (81). Ce dernier est dans cet exemple un filtre imprégné selon la technique SCR.

Les conditions de roulage sont surveillées (82) et on détecte une zone de risque de surémission (83) de NOₓ (ce qui correspond donc à des conditions sévères de fonctionnement) et en parallèle (84) on détecte une zone de risque de NH₃ slip lorsque de l'ammoniac ou de l'urée ou l'un de ses dérivés produisant de l'ammoniac est injecté en amont du FAP. On prédit alors (85) l'amplitude du signal délivré par le capteur NOₓ dans cette zone avec un FAP en bon état.

Ce signal est comparé (86) au signal fourni par le capteur NOₓ (87a) qui est enregistré (87b), ce signal étant le signal émis par le capteur NOₓ pendant la période de la zone de risque de surémission (83) ou de NH₃ slip (84).

L'écart entre le signal prédit (85) et le signal enregistré sur la zone (87b) est déterminé et comparé à un seuil prédéterminé (88). Si l'écart est supérieur audit seuil (88 a), on diagnostique une défaillance du FAP (89). Si l'écart est inférieur (88 b) au seuil, l'état de conversion des NOₓ du FAP est mis à jour (90) et enregistré en mémoire (81) Cet état de conversion servira de référence pour la prédiction du signal du capteur NOₓ au cours du prochain diagnostic effectué après la régénération suivante du FAP.

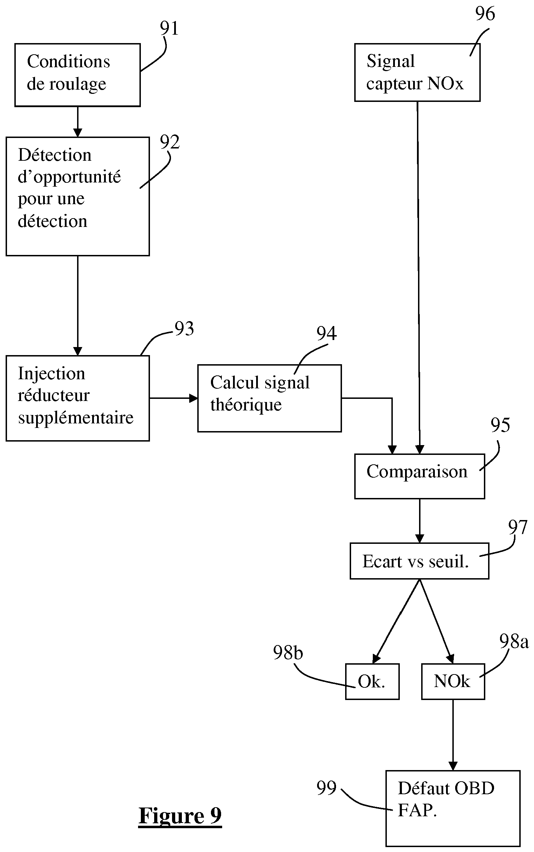

La figure 9 illustre, sous la forme d'un logigramme, un exemple de stratégie active. Des conditions prédéterminées de roulage (91) sont mémorisées et l'on détecte (92) l'apparition de l'une de ces conditions prédéterminées (par exemple, un régime moteur stabilisé ou le ralenti du moteur).Lorsque l'une de ces conditions se produit, une quantité supplémentaire de réducteur est injecté (93) en amont du FAP et un signal théorique est calculé (94). Ce signal est comparé (95) avec le signal émis par le capteur NOₓ (96). L'écart entre le signal théorique (94) et le signal délivré par le capteur (96) est comparé à un seuil prédéterminé (97). Si ledit écart est supérieur (98a) audit seuil, on diagnostique une défaillance du FAP (99). Par contre, si ledit écart est inférieur (98b), on diagnostique le bon fonctionnement du FAP.

La présente invention permet de réaliser le diagnostic de filtration des particules sans ajout supplémentaire de matériels, tel qu'un capteur dédié.

D'autres modes de réalisation que ceux décrits et représentés peuvent être conçus par l'homme du métier sans sortir du cadre de la présente invention.

## Revendications

1. Procédé de détection du fonctionnement défaillant d'un filtre à particules d'un système anti-pollution d'un moteur thermique, ledit filtre à particules étant imprégné d'un catalyseur permettant de réduire les oxydes d'azotes NOx et un capteur de NOₓ situé en aval dudit filtre à particules permettant de détecter les NOx non réduits par ledit catalyseur, ledit procédé étant **caractérisé en ce que** l'on utilise l'information (51, 52, 61, 62, 71, 72) fournie par ledit capteur NOₓ , ladite information fournie par ledit capteur étant l'évolution des caractéristiques de conversion des NOₓ par ledit catalyseur, pour diagnostiquer un fonctionnement défaillant dudit filtre à particules, à savoir une baisse d'efficacité de sa capacité de filtration des particules, procédé dans lequel
- la quantité des NOx présents dans les gaz d'échappement dudit moteur, en amont dudit filtre à particules, est déterminée pour des conditions de fonctionnement sévères (53) et prédéterminées du moteur,
- pour au moins l'une desdites conditions prédéterminées, on mesure la quantité des NOx détectée (52) par ledit capteur NOx,
- on détermine l'efficacité de conversion dudit catalyseur et
- si l'efficacité déterminée est en baisse, on en conclut à une défaillance du filtre à particules.

2. Procédé selon la revendication 1, le capteur NOₓ étant en outre apte à détecter de l'ammoniac, **caractérisé en ce que**:
- un agent réducteur est injecté en amont dudit filtre à particules, ledit agent étant d'un type tel que de l'ammoniac, de l'urée ou un dérivé de l'urée source d'ammoniac, favorisant la conversion des NOₓ et étant injecté en quantité nécessaire et suffisante pour convertir les NOₓ contenus dans les gaz d'échappement en amont dudit filtre à particules,
- on détecte l'apparition éventuelle d'émissions supplémentaires d'ammoniac (63, 64, 65) à l'aide du capteur NOₓ à la suite de conditions de fonctionnement sévères du moteur, et
- si au moins une émission supplémentaire d'ammoniac (64, 65) est détectée par le capteur NOₓ, alors on diagnostique une défaillance du filtre à particules.

3. Procédé selon l'une des revendications 1 ou 2, **caractérisé en ce que** lesdites conditions de fonctionnement sévères font partie des conditions de roulement du véhicule imposées par les tests d'homologation concernant les normes anti-pollution.

4. Procédé selon la revendication 1, le capteur NOₓ étant en outre apte à détecter de l'ammoniac, **caractérisé en ce que**:
- des injections d'un agent réducteur sont réalisées en amont dudit filtre à particules, ledit agent étant d'un type tel que de l'ammoniac, de l'urée ou un dérivé de l'urée source d'ammoniac, favorisant la conversion des NOₓ et étant injecté en quantité supérieure à la quantité suffisante pour convertir le NOₓ contenus dans les gaz d'échappement en amont du filtre à particules,
- on détecte à l'aide dudit capteur NOₓ une augmentation éventuelle des émissions d'ammoniac (73), et
- en cas d'une telle augmentation on diagnostique une défaillance du filtre à particules.

5. Procédé selon l'une des revendications précédentes **caractérisé en ce que** ledit catalyseur est du type SCR.

## Patentansprüche

1. Verfahren für den Nachweis des defekten Betriebs eines Partikelfilters eines Reinhaltungssystems eines Verbrennungsmotors, wobei das Partikelfilter mit einem Katalysator imprägniert ist, der es erlaubt, die Stickstoffoxide NOₓ zu verringern, und einen NOₓ-Sensor, der stromabwärts des Partikelfilters liegt, der es erlaubt, die von dem Katalysator nicht reduzierten NOₓ nachzuweisen, Verfahren **dadurch gekennzeichnet, dass** man die Information (51, 52, 61, 62, 71, 72) verwendet, die von dem NOₓ-Sensor geliefert wird, wobei die von dem Sensor gelieferte Information die Entwicklung der Umwandlungsmerkmale der NOₓ durch den Katalysator ist, um einen defekten Betrieb des Partikelfilters zu diagnostizieren, nämlich ein Sinken der Effizienz seiner Filterkapazität der Partikel, Verfahren bei dem
- die Menge der NOₓ, die in dem Abgas des Motors stromaufwärts des Partikelfilters vorliegen, für schwierige und vorbestimmte Betriebsbedingungen (53) des Motors bestimmt wird,
- die Menge der von dem NOₓ-Sensor erfassten NOₓ (52) für mindestens eine der vorbestimmten Bedingungen gemessen wird,
- die Umwandlungseffizienz des Katalysators bestimmt wird, und
- falls die bestimmte Effizienz sinkt, auf ein Versagen des Partikelfilters geschlossen wird.

2. Verfahren nach Anspruch 1, wobei der NOₓ-Sensor außerdem angepasst ist, um Ammoniak nachzuweisen, **dadurch gekennzeichnet, dass**
- ein Reduktionsmittel stromaufwärts des Partikelfilters injiziert wird, wobei das Mittel von einem Typ ist wie Ammoniak, Harnstoff oder ein Harnstoffderivat, das eine Ammoniakquelle ist, die die Umwandlung der NOₓ begünstigt, und das in erforderlicher und ausreichender Menge injiziert wird, um die NOₓ, die in den Abgasen stromaufwärts des Partikelfilters enthalten sind, umzuwandeln,
- das eventuelle Erscheinen zusätzlicher Ammoniakemissionen (63, 64, 65) mit Hilfe des NOₓ-Sensors im Anschluss an schwierige Betriebsbedingungen des Motors nachgewiesen wird, und
- falls mindestens eine zusätzliche Ammoniakemission (64, 65) von dem NOₓ-Sensor nachgewiesen wird, ein Versagen des Partikelfilters diagnostiziert wird.

3. Verfahren nach einem der Ansprüche 1 oder 2, **dadurch gekennzeichnet, dass** die schwierigen Betriebsbedingungen Teil der Fahrbedingungen des Fahrzeugs sind, die von den Zulassungstests in Zusammenhang mit den Umweltschutznormen auferlegt werden.

4. Verfahren nach Anspruch 1, wobei der NOₓ-Sensor außerdem angepasst ist, um Ammoniak nachzuweisen, **dadurch gekennzeichnet, dass**:
- Injektionen eines Reduktionsmittels stromaufwärts des Partikelfilters ausgeführt werden, wobei das Mittel von dem Typ ist wie Ammoniak, Harnstoff oder ein Harnstoffderivat, das eine Ammoniakquelle ist, die die Umwandlung der NOₓ begünstigt und in höherer Menge als die ausreichende Menge zum Umwandeln des NOₓ, das in den Abgasen stromaufwärts des Partikelfilters enthalten ist, injiziert wird,
- mit Hilfe des NOₓ-Sensors eine eventuelle Erhöhung der Ammoniakemissionen (73) nachgewiesen wird, und
- im Fall einer solchen Erhöhung ein Versagen des Partikelfilters diagnostiziert wird.

5. Verfahren nach einem der vorhergehenden Ansprüche, **dadurch gekennzeichnet, dass** der Katalysator des Typs SCR ist.

## Claims

1. A method for detecting the defective operation of a particulate filter of a pollution control system of a heat engine, said particulate filter being impregnated with a catalyst permitting the reduction of the nitrogen oxides NOx, and a NOx sensor situated downstream of said particulate filter permitting the detection of the NOx that have not been reduced by said catalyst, said method being **characterized in that** the data (51, 52, 61, 62, 71, 72) supplied by said NOx sensor is used, said data supplied by said sensor being the development of the conversion characteristics of the NOx by said catalyst, to diagnose a defective operation of said particulate filter, namely a drop in efficiency of its filtration capacity of the particles, a method in which
- the quantity of the NOx present in the exhaust gases of said engine, upstream of said particulate filter, is determined for severe (53) and predetermined operating conditions of the engine,
- for at least one of said predetermined conditions, the detected quantity of the NOx (52) by said NOx sensor is measured,
- the conversion efficiency of said catalyst is determined and
- if the determined efficiency is decreasing, a failure of said particulate filter is concluded therefrom.

2. The method according to Claim 1, the NOx sensor being, furthermore, able to detect ammonia, **characterized in that**:
- a reducing agent is injected upstream of said particulate filter, said agent being of a type such as ammonia, urea or a derivative of urea ammonia source, promoting the conversion of the NOx and being injected in a necessary and sufficient quantity for converting the NOx contained in the exhaust gases upstream of said particulate filter,
- the possible appearance of supplementary emissions of ammonia (63, 64, 65) is detected by means of the NOx sensor as a result of severe operating conditions of the engine, and
- if at least one supplementary emission of ammonia (64, 65) is detected by the NOx sensor, then a failure of the particulate filter is diagnosed.

3. The method according to one of Claims 1 or 2, **characterized in that** said severe operating conditions form part of the running conditions of the vehicle imposed by the approval tests concerning pollution control standards.

4. The method according to Claim 1, the NOx sensor being furthermore able to detect ammonia, **characterized in that**:
- injections of a reducing agent are carried out upstream of said particulate filter, said agent being of a type such as ammonia, urea or a derivative of urea ammonia source, promoting the conversion of the NOx and being injected in a greater quantity than the quantity sufficient for converting the NOx contained in the exhaust gases upstream of the particulate filter,
- by means of said NOx sensor, a possible increase of the ammonia emissions (73) is detected, and
- in the case of such an increase, a failure of the particulate filter is diagnosed.

5. The method according to one of the preceding claims, **characterized in that** said catalyst is of the SCR type.
